# FASCICULE DE BREVET EUROPEEN

(11) **EP 0 517 585 B1**
(45) Date de publication et mention de la délivrance du brevet: **11.10.1995**
(21) Numéro de dépôt: 92401515.9
(22) Date de dépôt: 03.06.1992
(51) Int. Cl.: H02K 49/02, H02K 3/24

(54) **Perfectionnements aux machines tournantes électriques**
Verbesserungen an elektrischen Drehmaschinen
Improvements in rotary electric machines

(30) Priorité: 06.06.1991 FR 9106877
(43) Date de publication de la demande: 09.12.1992
(73) Titulaire: LABAVIA S.G.E., F-78180 Montigny le Bretonneux (FR)
(72) Inventeur: Even, Denis, F-95000 Cergy (FR)
(74) Mandataire: Loisel, Bertrand

(56) Documents cités:
- DE-C- 284 237
- FR-A- 857 393
- FR-A- 928 011
- FR-A- 2 500 965
- GB-A- 822 313
- US-A- 2 167 360
- US-A- 3 423 616

## Description

L'invention est relative aux machines tournantes électriques comprenant un inducteur agencé de façon à créer une couronne de pôles magnétiques de polarités alternées de proche en proche lorsqu'il est relié à une source de courant électrique et un induit agencé de façon telle que, lors du fonctionnement de la machine, on observe un défilement relatif entre lui et l'inducteur avec interposition d'un entrefer cylindrique de révolution de faible épaisseur, l'induit comportant un manchon de révolution constitué en matériau ferromagnétique feuilleté, évidé au voisinage de l'entrefer par une couronne d'encoches rectilignes s'étendant parallèlement à l'axe du manchon et ouvertes à leurs deux extrémités axiales, chacune de ces encoches étant garnie par une pièce en matériau conducteur de l'électricité, les deux extrémités axiales de ces pièces dépassant axialement hors du manchon et étant connectées électriquement entre elles par deux bagues en matériau conducteur de l'électricité encadrant axialement le manchon.

Dans les modes de réalisation connus de ces machines (documents GB-A-822313 et FR-A-857 393), lesquelles sont en général des moteurs à induction à cage d'écureuil et non pas des machines génératrices de calories, les pièces conductrices remplissent intégralement les encoches qu'elles garnissent, de sorte qu'il n'est pas possible d'y faire circuler de l'air en vue d'un échange calorifique.

La présente invention a pour but, surtout, de rendre une machine tournante du genre ci-dessus telle qu'elle soit exploitable essentiellement comme source de chaleur, notamment aux fins de chauffage d'un habitacle de véhicule, le rotor de ladite machine étant alors lié angulairement soit à l'arbre de transmission de ce véhicule, soit à l'arbre du moteur dudit véhicule, notamment par l'intermédiaire d'un ensemble à poulies et courroie.

A cet effet, les machines tournantes du genre en question selon l'invention sont essentiellement caractérisées en ce que les pièces conductrices qui garnissent leurs encoches sont des feuilles ondulées en zig-zag de manière à former entre leurs ondulations des canaux pour la circulation axiale de l'air et en ce que des moyens sont prévus pour faire circuler l'air dans les canaux.

Dans des modes de réalisation préférés, on a recours en outre à l'une et/ou à l'autre des dispositions suivantes :
- les faces extérieures des coudes de chaque feuille ondulée sont logées jointivement dans des rainures complémentaires pratiquées dans les faces latérales de l'encoche correspondante,
- les tronçons, de chaque feuille ondulée, compris entre ses coudes, sont légèrement incurvés,
- si l'induit constitue le rotor de la machine, la courbure des tronçons selon l'alinéa précédent est telle que leur concavité soit orientée radialement vers l'extérieur,
- la forme générale de la section transversale de chaque encoche est trapézoïdale de façon telle que les portions, du manchon, comprises entre deux encoches successives, présentent sensiblement la même épaisseur circonférentielle en tous leurs points radiaux,
- les bagues en matériau conducteur de l'électricité sont évidées par des encoches ayant le même profil que les encoches évidées dans le manchon et sont traversées semblablement par les extrémités des feuilles ondulées,
- les moyens pour faire circuler l'air dans les canaux comprennent au moins une couronne d'aubages solidaire du rotor,
- la machine tournante est équipée d'une volute de sortie et de conduits propres à relier les sorties axiales des différentes encoches de l'induit à ladite volute de façon à engendrer un courant unique d'air chaud à la sortie de la machine,
- la feuille conductrice présente une épaisseur comprise entre 0,1 et plusieurs mm,
- l'écartement radial mutuel des tronçons successifs de la feuille ondulée est compris entre 1 et 5 mm, étant de préférence de l'ordre de 2 mm,
- le nombre des encoches est compris entre 6 et 100 et même davantage, et de préférence égal à 24.

L'invention comprend, mises à part ces dispositions principales, certaines autres dispositions qui s'utilisent de préférence en même temps et dont il sera plus explicitement question ci-après.

Dans ce qui suit, l'on va décrire quelques modes de réalisation préférés de l'invention en se référant aux dessins ci-annexés d'une manière bien entendu non limitative.

La figure 1, de ces dessins, montre schématiquement en bout et en partie une machine électrique tournante établie selon l'invention.

La figure 2, montre en vue perspective l'induit de cette machine.

La figure 3, est un agrandissement partiel de la figure 1.

La figure 4 montre en coupe axiale selon IV-IV, figure 3, d'une façon plus complète et à plus petite échelle, la machine tournante ci-dessus.

La figure 5 montre, selon une vue analogue à la figure 1, une portion d'une autre machine tournante électrique établie selon l'invention.

La figure 6 montre plus complètement une coupe axiale d'une telle machine.

La figure 7 est une coupe axiale d'une autre machine tournante électrique également conforme à l'invention.

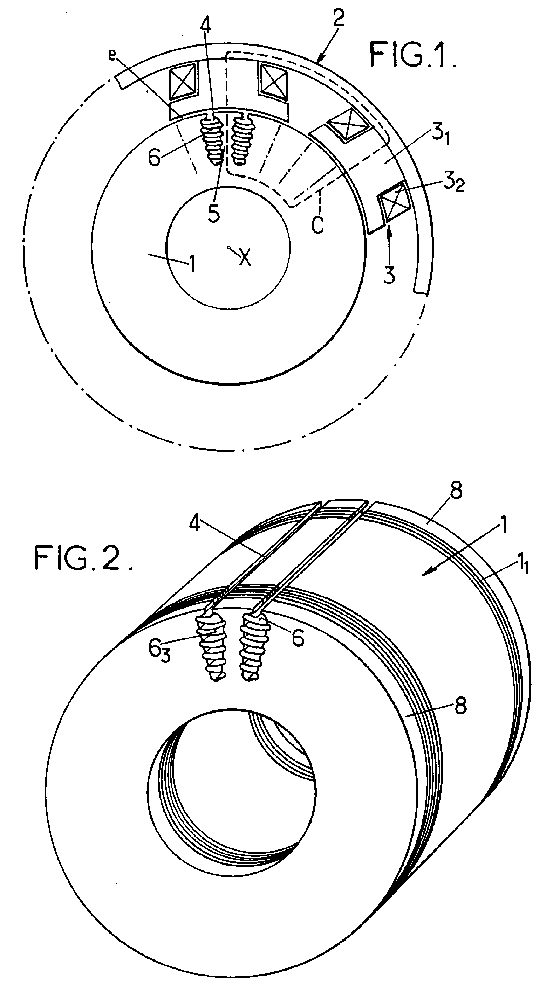

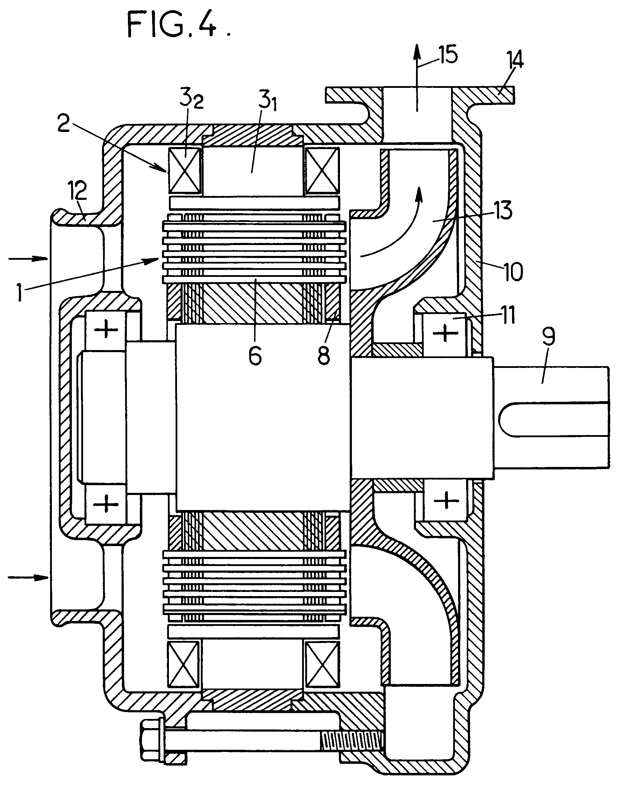

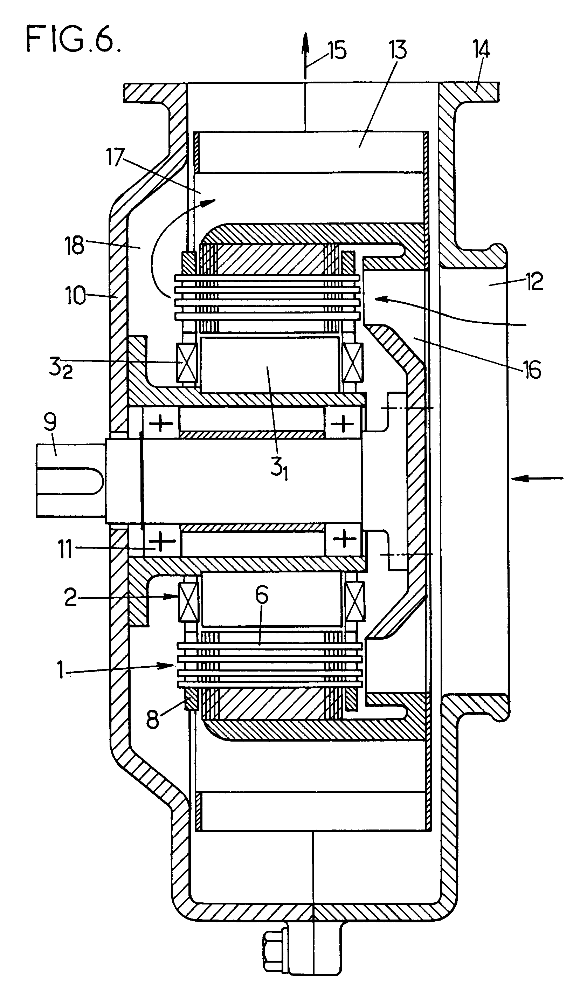

Dans chaque cas, l'induit de la machine tournante électrique considérée est constitué par un manchon cylindrique de révolution 1 d'axe X et par un inducteur 2 coaxial à l'induit et propre à engendrer, avec interposition d'un entrefer e de faible épaisseur radiale, soit à l'extérieur de la face cylindrique extérieure du manchon (figures 1 à 4) soit à l'intérieur de la face cylindrique intérieure dudit manchon (figures 5, 6 et 7), une couronne de pôles inducteurs 3 angulairement équidistants, ces différents pôles étant en nombre pair et leurs polarités étant alternées de proche en proche.

L'induit 1 peut être intérieur ou extérieur à l'inducteur et il peut faire partie du rotor ou du stator.

Dans le premier mode de réalisation faisant l'objet des figures 1 à 4, l'induit est rotorique et disposé à l'intérieur de l'inducteur.

Le manchon cylindrique constitutif de cet induit est constitué en matériau ferromagnétique.

Plus précisément, il est composé par empilage axial de tôles minces découpées 1₁ en un tel matériau, les différentes tôles juxtaposées étant isolées électriquement les unes des autres par interposition d'un revêtement approprié tel qu'un vernis isolant.

L'épaisseur de chaque tôle est généralement comprise entre 0,5 et 2 mm, étant notamment de l'ordre du mm.

En outre, une couronne de canaux ou encoches 4 s'étendant parallèment à l'axe X sont évidés dans l'induit 1 à proximité de la face cylindrique extérieure de celui-ci.

Comme bien visible sur les figures 1 à 3, la section transversale de chaque encoche 4 présente avantageusement la forme d'un trapèze légèrement convergent vers l'axe X de façon que les portions 5 de manchon ferromagnétique comprises entre deux encoches successives présentent en tous leurs points radiaux une épaisseur circonférentielle sensiblement constante : cette mesure permet d'éviter la formation de points d'étranglement dans le circuit C offert au flux magnétique à l'intérieur de l'induit.

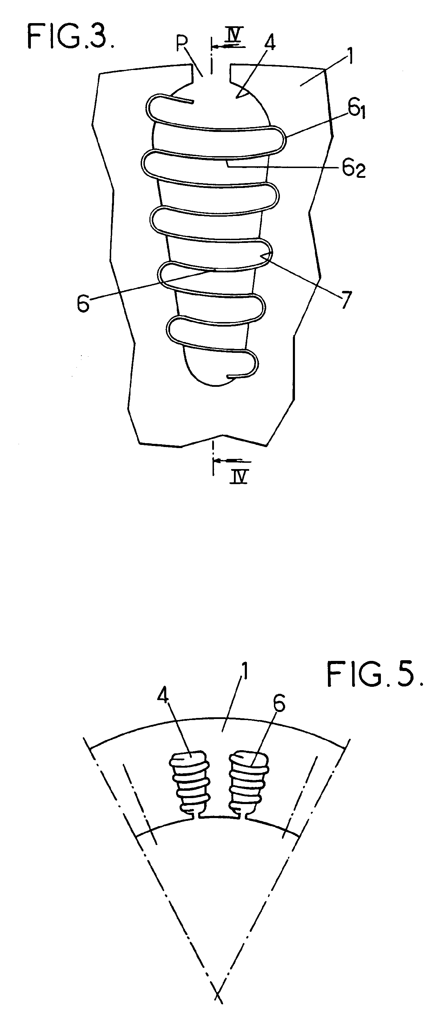

Les encoches 4 pourraient être fermées radialement. Dans les modes de réalisation illustrés, ces encoches sont ouvertes radialement, mais communiquent avec l'extérieur du manchon par des passages étranglés P (figure 3).

Chacune des encoches 4 est garnie d'une feuille ondulée en zig-zag 6 constituée en un matériau conducteur de l'électricité.

Ces feuilles 6 sont ondulées de façon à présenter la forme générale de cylindres dont la directrice est composée de coudes semi-circulaires 6₁ orientés successivement dans des sens opposés et reliés entre eux par des tronçons 6₂ sensiblement rectilignes (voir figure 3).

Les coudes 6₁ sont logés jointivement dans des rainures complémentaires 7 évidées dans les faces latérales des encoches.

Pour éviter une déformation incontrôlée des tronçons 6₂ sous l'effet des dilatations thermiques, on leur donne un léger galbe permanent lors du montage des feuilles 6 correspondantes sans que la limite élastique du matériau constitutif desdites feuilles soit atteinte: à cet effet, dans un premier temps, les feuilles 6 sont mises en forme de façon telle que les tronçons 6₂ compris entre les coudes 6₁ soient plans et le galbe de ces tronçons 6₂ est obtenu en pinçant légèrement lesdites feuilles 6 lors de leur introduction axiale dans les encoches 4.

Dans le cas présent où l'induit fait partie du rotor, la convexité des galbes est orientée vers l'axe X, ce qui confère aux tronçons 6₂ considérés une bonne résistance à la force centrifuge.

Le matériau conducteur constitutif des feuilles 6 est avantageusement un alliage à dispersion obtenu par frittage, tel qu'un cuivre à dispersion d'oxyde d'aluminium (Al₂O₃), alliage qui présente de bonnes propriétés physiques aux températures de fonctionnement.

Le cas échéant, la feuille considérée peut être revêtue par une couche de nickel ou autre matériau protecteur, par exemple vis-à-vis des oxydations à haute température.

La dimension axiale de chaque feuille 6 est telle que ses bords 6₃ débordent au-delà des deux extrémités axiales du manchon 1.

Deux bagues conductrices 8 sont prévues pour connecter entre eux ces bords 6₃ des feuilles 6, formant avec ces feuilles un circuit électrique fermé en cage d'écureuil.

Les bagues 8 sont avantageusement constituées en cuivre ou alliage cuivreux et sont encochées selon le même profil que le circuit magnétique 1 de façon à être connectées semblablement aux bords 6₃ des feuilles 6.

Les bagues 8 peuvent être massives ou constituées par des empilages de feuilles découpées.

L'épaisseur axiale totale de chaque bague est avantageusement de l'ordre de la moitié de la plus grande largeur de chaque encoche 4 afin d'éviter des rétrécissements du circuit électrique ainsi formé, rétrécissements qui se traduiraient par la création de points chauds.

Les feuilles 6 sont avantageusement brasées ou soudées sur les bagues 8 le long de leurs surfaces en contact mutuel, c'est-à-dire entre les coudes des feuilles et les fonds des rainures des bagues dans lesquels ces coudes sont logés.

Les bagues 8 sont de préférence indépendantes du manchon 1 de façon à rendre possibles les déformations thermiques des feuilles 6 selon la direction axiale.

L'épaisseur de chaque feuille 6 est comprise entre 0,10 mm et plusieurs mm.

L'écartement radial des tronçons 6₂ consécutifs, de cette feuille, qui traversent circonférentiellement les encoches 4, est compris entre 1 et 5 mm, étant de préférence de l'ordre de 2 mm.

Le nombre des encoches est au minimum égal à 6 et peut atteindre 100 ou même davantage : dans le mode de réalisation préféré illustré, ce nombre des encoches est égal à 24.

Dans le mode de réalisation des figures 1 à 4, l'inducteur 2 est à pôles saillants en ce sens que chaque pôle 3 est constitué par un noyau radial magnétique 3₁ entouré par un enroulement ou bobine de fil électrique 3₂.

Les différentes bobines sont reliées à une source de courant électrique continu à travers des organes de commande et de réglage appropriés qui n'ont pas été représentés.

L'induit 1, quant à lui, est calé angulairement sur un arbre rotatif 9 qui est solidarisé angulairement par tous moyens désirables avec l'arbre de transmission d'un véhicule ou avec l'arbre du moteur de ce véhicule, notamment par l'intermédiaire d'un ensemble à poulies et courroie.

L'arbre 9 est monté sur un carter 10 par l'intermédiaire de roulements 11.

Le carter 10 présente une entrée d'air axiale 12 permettant d'admettre l'air axialement en regard de l'une des deux extrémités axiales de la couronne d'encoches 4 de l'induit décrit ci-dessus et l'autre extrémité axiale de ces encoches, constituant la sortie de l'induit, débouche dans une couronne d'aubages inclinés 13 qui fait partie du même rotor et constitue un ventilateur centrifuge.

Ce ventilateur 13 est lui-même logé dans une volute 14 conformée de façon à recueillir la totalité des jets d'air sortants dudit ventilateur et à former avec ceux-ci un courant d'air de sortie unique 15.

Lorsque la machine est excitée par l'alimentation électrique des bobines 3₂ et mise en rotation de l'arbre 9, les courants électriques induits dans les différents conducteurs 6 de l'induit se traduisent par un échauffement de ces derniers et le courant d'air 15 est chaud.

Il suffit donc de l'envoyer, à l'aide de canalisations appropriées, vers des bouches d'alimentation en air chaud de l'habitacle du véhicule que l'on désire chauffer.

Cette machine chauffante est intéressante du fait que l'énergie électrique nécessaire à l'alimentation des bobines 3₂ est relativement faible et que l'essentiel de l'énergie calorifique produite provient de la transformation du mouvement mécanique de rotation de l'arbre 9.

Bien entendu, cette formule est particulièrement avantageuse lorsque le véhicule dont on désire chauffer l'habitacle doit être fréquemment ralenti et en particulier lorsque ce véhicule doit descendre une rampe de grande longueur.

Dans un tel cas en effet, la prise d'énergie mécanique effectuée sur l'arbre 9 contribue par elle-même à ralentir le véhicule, ce qui constitue un avantage en lui-même au lieu de constituer une consommation d'énergie utile.

Dans le second mode de réalisation illustré sur les figures 5 et 6, les éléments analogues à ceux décrits précédemment ont été désignés par les mêmes références que précédemment.

Ce second mode de réalisation diffère essentiellement du premier en ce que les encoches 4 sont évidées dans la face intérieure du manchon induit 1 au lieu d'être évidées dans sa face extérieure.

Mais cet induit 1 fait encore ici partie du rotor de la machine.

L'inducteur, du type à pôles saillants vers l'extérieur 3₁,3₂, est alors monté axialement en porte-à-faux sur le carter 10 de la machine de façon à être logé radialement entre l'arbre 9 et l'induit 1, et cet induit est à son tour monté en porte-à-faux sur une couronne d'aubages d'entrée 16 elle-même calée sur un bout de l'arbre 9.

Le ventilateur centrifuge 13 qui débouche tangentiellement dans la volute 14 pour former le courant d'air chaud sortant 15 est ici monté autour de l'induit, les jets d'air qui sortent axialement de cet induit étant guidés vers une entrée latérale 17 de ce ventilateur par une portion 18 conformée en correspondance du carter 10.

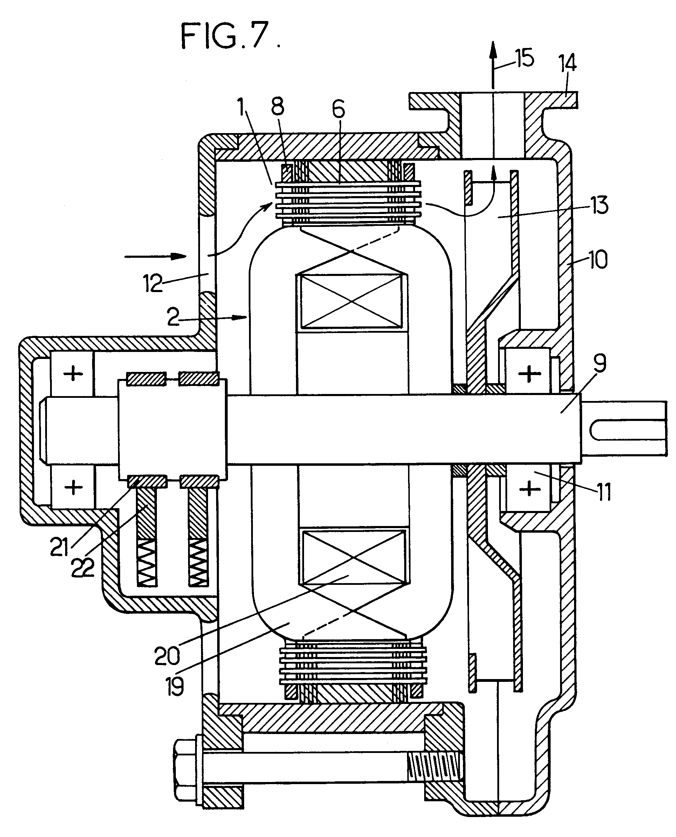

Le troisième mode de réalisation illustré sur la figure 7, pour lequel les éléments analogues à ceux décrits précédemment sont encore désignés par des références identiques aux références précédentes, diffère essentiellement des deux premiers modes de réalisation en ce que l'induit fait ici partie du stator de la machine au lieu d'être rotatif.

Cet induit est encore du type à encoches orientées vers l'axe, comme dans le second mode de réalisation.

L'inducteur 2 est alors rotatif, et il est ici du type à griffes 19, avec un enroulement unique 20.

On retrouve dans ce troisième mode de réalisation l'entrée d'air 12 ainsi qu'un ventilateur centrifuge 13 de sortie logé dans une volute 14, ledit ventilateur faisant partie du rotor et son entrée, latérale, étant disposée axialement en regard de la sortie de l'induit 1.

On voit également sur la figure 7 un ensemble de deux bagues 21 associées à des frotteurs 22, destiné à alimenter en énergie électrique la bobine 20 à partir d'une source de courant électrique extérieure.

En suite de quoi, et quel que soit le mode de réalisation adopté, on dispose finalement d'une machine tournante dont la constitution résulte suffisamment de ce qui précède.

Comme déjà évoqué ci-dessus à propos du premier mode de réalisation, le fonctionnement de cette machine est le suivant.

Lorsque l'arbre 9 est entraîné en rotation, les aubages de ventilation de la machine créent un courant d'air qui traverse axialement les canaux 4 de l'induit 1 et qui sort de la machine en 15.

Tant que l'inducteur 2 n'est pas excité électriquement, ce courant d'air demeure à la température ambiante.

Dès que ledit inducteur 2 est excité électriquement, le déplacement relatif des pôles magnétiques en regard de l'induit 2 a pour effet d'induire dans les feuilles 6 des courants électriques générateurs de chaleur.

Le courant d'air qui traverse l'induit balaie la quasi-totalité des deux faces de chacune desdites feuilles 6 et s'échauffe à leur contact en évacuant la chaleur correspondante : le courant d'air sortant 15 est alors chaud et peut être exploité aux fins de chauffage de l'habitacle du véhicule.

On notera que la source de cette énergie calorifique est une toute petite partie de l'énergie mécanique disponible sur le véhicule.

Certes, cette énergie doit être produite par le moteur du véhicule tant qu'il n'est pas nécessaire de ralentir celui-ci.

Mais elle devient totalement disponible, et même excédentaire, lors des périodes où l'on a besoin de ralentir le véhicule.

Lors de ces périodes, la machine peut être considérée comme un ralentisseur de ce véhicule, l'énergie calorifique produite pouvant éventuellement, à ces instants, être évacuée hors du véhicule s'il n'est alors pas besoin de réchauffer son habitacle.

Indépendamment des considérations thermiques, la génération du courant d'air 15 nécessite le prélèvement d'une partie de l'énergie mécanique disponible.

Cette partie est relativement très faible, mais on peut la réduire encore au point de la rendre négligeable en pratique lors des périodes où aucun besoin de chauffage ne se manifeste et où aucun ralentissement n'est désiré, en prévoyant des moyens pour débrayer alors, de préférence automatiquement, le ventilateur.

## Revendications

1. Machine tournante électrique comprenant un inducteur (2) agencé de façon à créer une couronne de pôles magnétiques de polarités alternées de proche en proche lorsqu'il est relié à une source de courant électrique et un induit agencé de façon telle que, lors du fonctionnement de la machine, on observe un défilement relatif entre lui et l'inducteur avec interposition d'un entrefer cylindrique de révolution de faible épaisseur, l'induit comportant un manchon de révolution (1) constitué en matériau ferromagnétique feuilleté, évidé au voisinage de l'entrefer par une couronne d'encoches rectilignes (4) s'étendant parallèlement à l'axe du manchon et ouvertes à leurs deux extrémités axiales, chacune de ces encoches étant garnie par une pièce (6) en matériau conducteur de l'électricité, les deux extrémités axiales de ces pièces dépassant axialement hors du manchon et étant connectées électriquement entre elles par deux bagues (8) en matériau conducteur de l'électricité encadrant axialement le manchon, caractérisée en ce que les pièces conductrices (6) qui garnissent les encoches sont des feuilles ondulées en zig-zag de manière à former entre leurs ondulations des canaux pour la circulation axiale de l'air et en ce que des moyens sont prévus pour faire circuler l'air dans les canaux.

2. Machine tournante selon la revendication 1, caractérisée en ce que les faces extérieures des coudes (6₁) de chaque feuille ondulée (6) sont logées jointivement dans des rainures complémentaires (7) pratiquées dans les faces latérales de l'encoche (4) correspondante.

3. Machine tournante selon la revendication 2, caractérisée en ce que les tronçons (6₂), de chaque feuille ondulée (6), compris entre ses coudes (6₁), sont légèrement incurvés.

4. Machine tournante selon la revendication 3, caractérisée en ce que, si l'induit (1) constitue le rotor de la machine, la courbure des tronçons (6₂) est telle que leur concavité soit orientée radialement vers l'extérieur.

5. Machine tournante selon l'une quelconque des précédentes revendications, caractérisée en ce que la forme générale de la section transversale de chaque encoche (4) est trapézoïdale de façon telle que les portions (5), du manchon (1), comprises entre deux encoches successives, présentent sensiblement la même épaisseur circonférentielle en tous leurs points radiaux.

6. Machine tournante selon l'une quelconque des précédentes revendications, caractérisée en ce que les bagues (8) en matériau conducteur de l'électricité sont évidées par des encoches (4) ayant le même profil que les encoches évidées dans le manchon et sont traversées semblablement par les extrémités (6₃) des feuilles ondulées (6).

7. Machine tournante selon l'une quelconque des précédentes revendications, caractérisée en ce que les moyens pour faire circuler l'air dans les canaux comprennent au moins une couronne d'aubages (13) solidaire du rotor.

8. Machine tournante selon l'une quelconque des précédentes revendications, caractérisée en ce qu'elle est équipée d'une volute de sortie (14) et de conduits propres à relier les sorties axiales des différentes encoches (4) de l'induit à ladite volute de façon à engendrer un courant unique d'air chaud (15) à la sortie de la machine.

9. Machine tournante selon l'une quelconque des précédentes revendications, caractérisée en ce que l'écartement radial mutuel des tronçons successifs de la feuille ondulée (6) est compris entre 1 et 5 mm, étant de préférence de l'ordre de 2 mm.

10. Machine tournante selon l'une quelconque des précédentes revendications, caractérisée en ce que le nombre des encoches (4) est compris entre 6 et 100 et même davantage, et de préférence égal à 24.

## Patentansprüche

1. Electrical rotary machine comprising a primary magnetic circuit (2) organized when connected to a source of electricity to create a ring of magnetic poles of polarities that alternate from pole to pole, and a secondary magnetic circuit arranged so that when the machine is in operation, relative displacement is observed between the primary and secondary magnetic circuits across a circularly cylindrical air gap that is narrow, the secondary magnetic circuit including a cylindrical sleeve (1) made of laminated ferromagnetic material and hollowed out in the vicinity of the air gap by a ring of rectilinear notches (4) extending parallel to the axis of the sleeve and open at both axial ends, each of the notches receiving a component (6) of electrically conductive material, the two axial ends of said components projecting axially from the sleeve and being electrically interconnected by two rings (8) of electrically conductive material disposed at opposite axial ends of the sleeve, characterized in that the conductive components (6) received in the notches are zig-zag corrugated sheets forming channels for axial air flow between their corrugations, and in that means are provided for causing air to flow along said channels.

2. Rotary machine according to claim 1, characterized in that the outside faces of the arcs (6₁) of each corrugated sheet (6) are closely received in complementary grooves (7) formed in the corresponding side faces of the notches (4).

3. Rotary machine according to claim 2, characterized in that the lengths (6₂) of each corrugated sheet (6) extending between its arcs (6₁) are slightly curved.

4. Rotary machine according to claim 3, characterized in that if the secondary magnetic circuit (1) constitutes the rotor of the machine, then the curvature of the lengths (6₂) is such that their concave sides face radially outwards.

5. Rotary machine according to any one of the preceding claims, characterized in that the general shape of the cross-section of each notch (4) is trapezium-shaped so that the portions (5) of the sleeve (1) extending between two successive notches present substantially the same circumferential thickness at all radial points thereof.

6. Rotary machine according to any one of the preceding claims, characterized in that the rings (8) of electrically conductive material have notches (4) formed therein with the same profile as the notches formed in the sleeve, and have the ends (6₃) of the corrugated sheets (6) passing through them similarly.

7. Rotary machine according to any one of the preceding claims, characterized in that the means for causing air to flow along the channels include at least one ring of blades (13) secured to the rotor.

8. Rotary machine according to any one of the preceding claims, characterized in that it is fitted with an outlet volute (14) and with ducts suitable for connecting the axial outlets of the various notches (4) of the secondary magnetic circuit to said volute so as to give rise to a single flow of hot air (15) at the outlet from the machine.

9. Rotary machine according to any one of the preceding claims, characterized in that the mutual radial spacing between successive lengths of each corrugated sheet (6) lies in the range 1 mm to 5 mm, and is preferably about 2 mm.

10. Rotary machine according to any one of the preceding claims, characterized in that the number of notches (4) lies in the range 6 to 100 or even more, and is preferably equal to 24.

## Claims

1. Elektrische Umdrehungsmaschine, bestehend aus einem Induktor (2), der so ausgebildet ist, daß er einen Kranz von Magnetpolen mit sich nach und nach ändernden Polaritäten erzeugt, wenn er an eine elektrische Stromquelle angeschlossen ist und einem Anker, der so ausgebildet ist, daß man beim Betrieb der Maschine zwischen ihm und dem Induktor eine relative Verschiebung unter Einhalten eines umdrehungszylinderischen Zwischenraumes von geringer Stärke beobachtet, wobei der Anker aus einer zylindrischen Hulse (1) aus ferromagnetischem, geschichteten Material besteht, in der in der Nähe des Zwischenraumes ein Kranz von geradlinigen Aussparungen (4) ausgenommen ist, die sich parallel zur Achse der Hülse erstrecken und an ihren beiden axialen Enden offen sind, wobei jede Ausssparung mit einem Teil (6) aus elektrisch leitendem Material ausgestattet ist und die beiden axialen Enden dieser Teile axial aus der Hülse herausragen und elektrisch über zwei Ringe (8) aus elektrisch leitendem Material miteinander verbunden sind, die die Hülse axial umrahmen, dadurch gekennzeichnet, daß die elektrisch leitenden Teile (6), mit denen die Aussparungen ausgestattet sind, Folien sind, die derart zickzackförmig gewellt sind, daß zwischen ihren Wellen Kanäle für eine axiale Luftzirkulation gebildet werden, und daß Einrichtungen vorgesehen sind, mit denen die Luft in den Kanälen umgewälzt wird.

2. Umdrehungsmaschine nach Anspruch 1, dadurch gekennzeichnet, daß die äußeren Oberflächen der Krümmungen (6₁) jeder gewellten Folie (6) dicht in zusätzlichen Rinnen (7) angeordnet sind, die in den Seitenflächen der entsprechenden Aussparungen (4) ausgenommen sind.

3. Umdrehungsmaschine nach Anspruch 2, dadurch gekennzeichnet, daß die Abschnitte (6₂) jeder gewellten Folie (6) zwischen ihren Krümmungen (6₁) leicht bogenförmig ausgebildet sind.

4. Umdrehungsmaschine nach Anspruch 3, dadurch gekennzeichnet, daß, wenn der Anker (1) den Rotor der Maschine bildet,die Krümmung der Abschnitte (6₂) so ist, daß ihre Konkavität radial nach außen gerichtet ist.

5. Umdrehungsmaschine nach einem der vorhergehenden Ansprüche, dadurch gekennzeichnet, daß die allgemeine Querschnittsform jeder Aussparung (4) trapezförmig ist, derart, daß die Abschnitte (5) der Hülse (1) zwischen zwei aufeinanderfolgenden Aussparungen an allen ihren radialen Punkten im wesentlichen die gleiche Umfangsstärke aufweisen.

6. Umdrehungsmaschine nach einem der vorhergehenden Ansprüche, dadurch gekennzeichnet, daß die Ringe (8) aus elektrisch leitendem Material mit Aussparungen (4) versehen sind, die das gleiche Profil (6) haben wie die Aussparungen, die in der Hülse ausgenommen sind und daß die Enden (6₃) der wellenförmigen Folien durch diese in ähnlicher Weise hindurchtreten.

7. Umdrehungsmaschine nach einem der vorhergehenden Ansprüche, dadurch gekennzeichnet, daß die Einrichtungen zum Umwälzen der Luft in den Kanälen aus wenigstens einem Kranz von Schaufeln (13) bestehen, die fest mit dem Rotor verbunden sind.

8. Umdrehungsmaschine nach einem der vorhergehenden Ansprüche, dadurch gekennzeichnet, daß sie mit einer Austrittsschnecke (14) und mit Leitungen versehen ist, die die axialen Ausgänge der verschiedenen Aussparungen (4) des Ankers mit der Schnecke so verbinden können, daß ein einziger Warmluftstrom (15) am Ausgang der Maschine erzeugt wird.

9. Umdrehungsmaschine nach einem der vorhergehenden Ansprüche, dadurch gekennzeichnet, daß der gegenseitige radiale Abstand zwischen aufeinanderfolgenden Abschnitten der gewellten Folie (6) zwischen 1 und 5 mm, vorzugsweise bei etwa 2 mm liegt.

10. Umdrehungsmaschine nach einem der vorhergehenden Ansprüche, dadurch gekennzeichnet, daß die Anzahl der Aussparungen (4) zwischen 6 und 100 und sogar darüber liegt und vorzugsweise 24 beträgt.
